# EUROPEAN PATENT APPLICATION

(11) **EP 4 450 443 A1**
(43) Date of publication of application: **23.10.2024**
(21) Application number: 23802135.6
(22) Date of filing: 07.09.2023
(51) Int. Cl.: B66B 1/34, B66B 1/24

(54) **ELEVATOR REMOTE CONTROL DEVICE AND ELEVATOR REMOTE CONTROL METHOD**

(30) Priority: 03.03.2023 KR 20230028582; 03.03.2023 KR 20230028600
(71) Applicant: Hyundai Elevator Co., Ltd., Chungju-si, Chungcheongbuk-do 27329 (KR)
(72) Inventor: KWON, Donghyun, Chungju-si, Chungcheongbuk-do 27329 (KR); LEE, Hongchang, Chungju-si, Chungcheongbuk-do 27329 (KR)
(74) Representative: Baldus, Oliver
(86) International application number: PCT/KR2023/013436
(87) International publication number: WO 2024/185941

(57) **Abstract**

Disclosed herein is an elevator management device including a database, a processor, and a communication unit. The database is configured to store a first identification number corresponding to a first layer representing a group of multiple buildings, a second identification number corresponding to a second layer representing one of the multiple buildings, a third identification number corresponding to a third layer representing multiple elevators in the one building, and a fourth identification number corresponding to a fourth layer representing one of the multiple elevators, the elevator management device receives an authentication key and an elevator control request via the communication unit, and the processor is configured to verify whether the received authentication key is an authentication key generated by the elevator management device and transmit the request to an elevator control terminal when a verification is made that the received authentication key is an authentication key generated by the elevator management device.

## Description

### TECHNICAL FIELD

Embodiments of the present disclosure relate to a remote elevator control device and a remote elevator control method and, more particularly, to a remote elevator control device used in a specific area in which a thing external to a system, for example, a robot, participates in an elevator control environment, and a remote elevator control method using the same.

### BACKGROUND ART

A thing, such as a robot, is utilized in an area where there is a cluster of elevator-equipped buildings. For example, a service robot delivers goods to hotel guests or serves food at a restaurant while traveling between several buildings. In order for such robots to use elevators in the buildings, the robots need to communicate with the elevators. However, developing a protocol/program for each building or building area to connect each robot to each elevator system can create an inefficient environment. In addition, in the case where a robot controls elevators directly, developing a protocol/program to connect the robot to every elevator can create an inefficient environment. Korean Patent Laid-open Publication No. 10-2022-0122961 and No. 10-2022-0032857 are incorporated herein by reference in its entirety.

### DISCLOSURE

### TECHNICAL PROBLEM

It is an object of the present disclosure to provide a standardized elevator control service to create an environment that ensures efficient site-specific program development and setting. Accordingly, elevator control and efficiency of elevator operation can be improved.

### TECHNICAL SOLUTION

In accordance with one aspect of the present disclosure, an elevator management device includes a database, a processor, and a communication unit. The database is configured to store a first identification number corresponding to a first layer representing a group of multiple buildings, a second identification number corresponding to a second layer representing one of the multiple buildings, a third identification number corresponding to a third layer representing multiple elevators in the one building, and a fourth identification number corresponding to a fourth layer representing one of the multiple elevators. The elevator management device receives an authentication key and an elevator control request via the communication unit. The processor is configured to verify whether the received authentication key is an authentication key generated by the elevator management device and transmit the request to an elevator control terminal in response to verifying that the received authentication key is an authentication key generated by the elevator management device.

In one embodiment, the elevator management device may receive at least one of the first to fourth identification numbers and an authentication request from an external device via the communication unit, and the processor may be configured to generate an authentication key and transmit the generated authentication key to the external device.

In one embodiment, the database may be configured to store the first identification number and related information in a first database table, store the second identification number and related information in a second database table, store the third identification number and related information in a third database table, and store the fourth identification number and related information in a fourth database table.

In one embodiment, the second database table may have a row containing the first identification number and the second identification number, the third database table may have a row containing the second identification number and the third identification number, and the fourth database table may have a row containing the third identification number and the fourth identification number.

In one embodiment, the second database table may be configured to show to which group of the first layer the second layer belongs, the third database table may be configured to show to which building of the second layer the third layer belongs, and the fourth database table may be configured to show to which third layer the fourth layer belongs.

In one embodiment, the elevator control request received by the elevator management device may include the first identification number, the second identification number, and the third identification number.

In one embodiment, the elevator control request may include a request to control one of the multiple elevators corresponding to the third layer.

In one embodiment, the elevator management device may receive elevator information from a public data portal via the communication unit, the elevator information being in a different format than the first to fourth identification numbers, and the processor may be configured to generate the first to fourth identification numbers corresponding to the elevator information based on the elevator information and store the generated first to fourth identification numbers in the database.

In one embodiment, the elevator control request received by the elevator management device may include the first identification number, the second identification number, the third identification number, and the fourth identification number, and may include a request to control one elevator corresponding to the fourth layer.

In accordance with another aspect of the present disclosure, an elevator management device includes a database, a processor, and a communication unit. The database is configured to store a first identification number corresponding to a first layer representing a group of multiple buildings, a second identification number corresponding to a second layer representing one of the multiple buildings, and a third identification number corresponding to a third layer representing multiple elevators in the one building. The elevator management device receives an authentication key and an elevator control request via the communication unit. The processor is configured to verify the received authentication key and transmit the elevator control request to an elevator control terminal in response to verifying that the received authentication key is a valid authentication key.

In accordance with a further aspect of the present disclosure, there is provided an elevator control method employed by an elevator management device using an open API. The elevator management device includes a database, a processor, and a communication unit. The database is configured to store a first identification number corresponding to a first layer representing a group of multiple buildings, a second identification number corresponding to a second layer representing one of the multiple buildings, a third identification number corresponding to a third layer representing multiple elevators in the one building, and a fourth identification number corresponding to a fourth layer representing one of the multiple elevators. The elevator control method includes: providing, by the processor, first data to enable an external device to select a group of multiple buildings, one of the multiple buildings, multiple elevators in the one building, and one of the multiple elevators; receiving, by the communication unit, at least a portion of the first data and an authentication request; generating, by the processor, an authentication key in response to the authentication request and sending the generated authentication key to the external device; receiving, by the communication unit, the authentication key and an elevator control request from the external device; and transmitting, by the processor, the elevator control request to an elevator control terminal in response to verifying that the authentication key is valid.

In one embodiment, the elevator control method may further include: generating, by the processor, a first database table containing the first identification number and related information, a second database table containing the second identification number and related information, a third database table containing the third identification number and related information, and a fourth database table containing the fourth identification number and related information and storing the generated first to fourth database tables in the database.

In one embodiment, the second database table may have a row containing the first identification number and the second identification number, the third database table may have a row containing the second identification number and the third identification number, and the fourth database table may have a row containing the third identification number and the fourth identification number.

In one embodiment, the elevator control request may include at least a portion of the first data.

In one embodiment, the elevator control request may include a request to control one of the multiple elevators corresponding to the third layer.

In one embodiment, the elevator control method may further include: receiving, by the communication unit, elevator information from a public data portal, the elevator information being in a different format than the first to fourth identification numbers; and generating, by the processor, the first to fourth identification numbers corresponding to the elevator information based on the elevator information and storing the generated first to fourth identification numbers in the database.

In one embodiment, the elevator control request may include the first identification number, the second identification number, the third identification number, and the fourth identification number, and may include a request to control one elevator corresponding to the fourth layer.

### TECHNICAL EFFECT

According to the embodiments of the present disclosure, by abstracting the status and control functions of different elevator systems and allowing the systems to have a standardized database for each elevator, a standardized protocol can be provided, thereby providing compatibility between robots using different types of platforms.

### DESCRIPTION OF THE DRAWINGS

The above and other aspects, features, and advantages of the present invention will become apparent from the detailed description of the following embodiments in conjunction with the accompanying drawings:
FIG. 1 is a block diagram of an elevator control environment according to one embodiment of the present disclosure;
FIG. 2 is a block diagram illustrating an example of sublayers of an elevator region 400 according to one embodiment of the present disclosure;
FIG. 3 is a block diagram of an elevator management device according to one embodiment of the present disclosure;
FIG. 4 to FIG. 11 show examples of data tables stored in a database according to one embodiment of the present disclosure; and
FIG. 12 is a flow diagram of an elevator control method according to one embodiment of the present disclosure.

### DETAILED DESCRIPTION OF EMBODIMENTS

Hereinafter, embodiments of the present invention will be described in detail with reference to the accompanying drawings such that the present invention can be easily implemented by those skilled in the art. It should be understood that the present invention may be embodied in different ways and is not limited to the following embodiments.

In the drawings, portions irrelevant to the description will be omitted for clarity. Like components will be denoted by like reference numerals throughout the specification.

In addition, it will be understood that the terms "includes", "comprises", "including" and/or "comprising", when used in this specification, specify the presence of stated features, steps, operations, elements, and/or components, but do not preclude the presence or addition of one or more other features, steps, operations, elements, components, and/or groups.

It will be understood that the invention described in this disclosure is not intended to be limited to any particular embodiment, and includes various modifications, equivalents, and/or alternatives to the embodiments of this disclosure.

As used herein, the expression "configured to" may be used interchangeably with, for example, "suitable for", "having the capacity to", "designed to", "adapted to", "made to", or "capable of" depending on the context. The expression "configured (or set up) to" may not necessarily mean "specifically designed (hardware wise) to". Instead, in a certain context, the expression "a device configured to" may mean that the device is "capable of" doing something in conjunction with other devices or components.

It will be understood that the related literature described in this disclosure is incorporated herein by reference in its entirety and that a person having ordinary skill in the art will be able to apply what is described in the related literature to the matter briefly described herein.

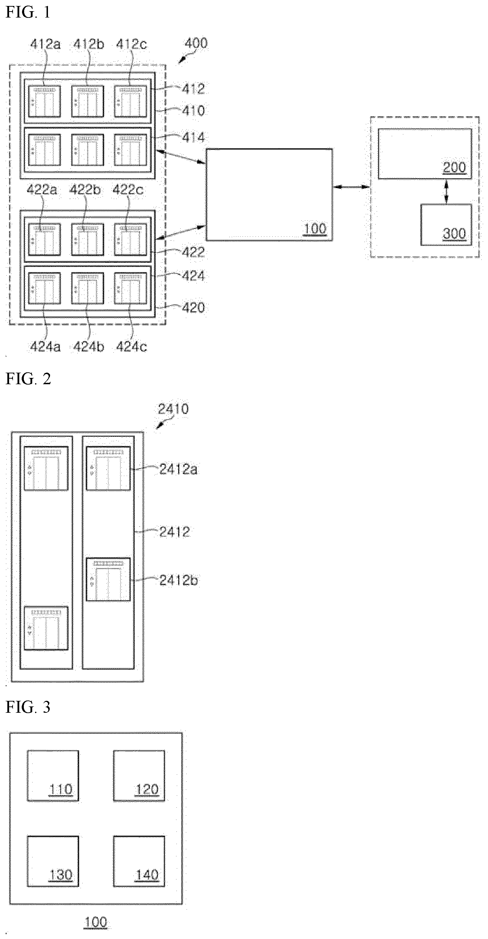

FIG. 1 is a block diagram of an elevator control environment 1000 according to one embodiment of the present disclosure.

Referring to FIG. 1, the elevator control environment 1000 includes an elevator management device 100, a thing management device 200, a thing 300, and an elevator region 400. For convenience of description, the following will assume that the thing 300 is a robot and the thing management device 200 is a robot management device. However, it will be understood that the scope of the present disclosure is not limited to control of robots and elevators. For example, the thing 300 is an external device/system that is not part of the elevator region 400, and may include a device that can remotely access the elevator management device 100 to control elevators. For example, the thing 300 may include any device for remotely controlling a device inside a building from outside, such as a building management system, an access security system, a passenger identification device (for example, facial recognition, iris recognition, fingerprint recognition, etc.), a mobile device, and a drone. One thing management device 200 may be connected to multiple things 300 to control the multiple things 300.

Although the thing management device 200 and the thing 300 are shown separately in FIG. 1 for convenience, it will be understood that, when a method performed by the thing 300 and a method performed by the thing management device 200 are carried out by one management entity, the methods may be described as performed by one device. That is, it will be understood that the thing 300 may be directly connected to the elevator management device 100 (that is, a central management device) to perform elevator control, or may be connected to the central management device 100 via the thing management device 200 to perform elevator control. Steps performed by the thing 300 may be performed by the thing management device 200, and vice versa. Accordingly, it will be understood that the thing management device 200 and the thing 300 may also be considered to be one and the same device.

In one embodiment, the elevator management device 100 may be provided in the form of a cloud platform. The elevator management device 100 may be disposed at a location physically separate from the elevator region 400. The elevator management device 100 may include at least one computing device and may be implemented as a server. Specifically, the elevator management device 100 may be implemented as a cloud server (system).

The elevator management device 100 is configured to have authority to authenticate the robot 300 and to control the elevators 412a, 412b, 412c, 414a, 414b, 414c, 422a, 422b, 422c, 424a, 424b, 424c within the elevator region 400. The elevator management device 100 is configured to check the status of the elevators 412a, 412b, 412c, 414a, 414b, 414c, 422a, 422b, 422c, 424a, 424b, 424c and control the elevators based thereon. The elevator management device 100 is configured to receive a request to control the elevators 412a, 412b, 412c, 414a, 414b, 414c, 422a, 422b, 422c, 424a, 424b, 424c from the robot 300, verify the request received from the robot 300, and forward the request to the elevator region 400.

The elevator management device 100 is configured to provide a programming environment that allows an external developer to build applications for external users using resources of the elevator management device 100.

The elevator management device 100 may include an open application programming interface (open API) and a developer site that provides information about the open API. An administrator of the robot management device 200 may utilize the developer site to develop applications based on the open API provided by the elevator management device 100.

The robot management device 200 may be a device that controls movement of the robot 300 and provision of services inside a building by the robot 300. The robot management device 200 may include at least one computing device and may be implemented as a server. The robot management device 200 may be implemented as a cloud server (system).

The robot management device 200 may monitor the elevators 412a, 412b, 412c, 414a, 414b, 414c, 422a, 422b, 422c, 424a, 424b, 424c, 424c by connecting the robot 300 to the robot management device 200 using the Open API of the elevator management device 100. The robot management device 200 may control the elevators 412a, 412b, 412c, 414a, 414b, 414c, 422a, 422b, 422c, 424a, 424b, 424c by connecting the robot 300 to the robot management device 200 using the Open API of the elevator management device 100. For example, the robot management device 200 may develop an elevator control application using information about the Open API, and may register and authenticate the elevator control application with the elevator management device 100. To this end, the elevator management device 100 may provide related services to the robot management device 200 by abstracting the services into standardized web services.

The robot management device 200 may control the elevators 412a, 412b, 412c, 414a, 414b, 414c, 422a, 422b, 422c, 424a, 424b, 424c via the elevator control application. The robot management device 200 is configured to control the robot 300 and control the elevators 412a, 412b, 412c, 414a, 414b, 414c, 422a, 422b, 422c, 424a, 424b, 424c via the elevator management device 100.

The robot management device 200 may access a database 120 (see FIG. 3) of the elevator management device 100 to be provided with data recorded in database tables stored in the database 130.

The robot 300 may be a service robot used to provide services within a building. The robot 300 may provide services to a user at a certain location (for example, on a certain floor) inside the building through autonomous driving. Although not shown, the robot 300 may include any autonomous mobile robot that can be implemented by conventional technology, and may have a communication unit to communicate with other devices (for example, other robots, the robot management device 200, or the like). The robot 300 may include a device capable of determining a current location of the robot 300 (for example, GPS, etc.). The robot 300 may be configured to select an elevator desired to be controlled based on the current location of the robot 300. For example, the robot 300 may search for an elevator capable of reaching a destination point and then may move to board an elevator that the robot 300 has found. The robot 300 may use an address (for example, apartment building number, apartment unit number, building name, floor number, etc.) to search for an elevator to be controlled. Specifically, the robot 300 may search for an elevator to be controlled using the address and first to fourth identification numbers. The first to fourth identification numbers will be described further below.

When or before the robot 300 arrives at a destination, for example, a specific area of the elevator region 400, the robot 300 may receive information about elevators in the specific area from the robot management device 200. In addition, the robot 300 may transmit the information about elevators in the specific area to the robot management device 200.

The robot 300 is configured to control the elevators 412a, 412b, 412c, 414a, 414b, 414c, 422a, 422b, 422c, 424a, 424b, 424c within the elevator region 400 via the robot management device 200. In one embodiment, the robot 300 may determine which of the elevators 412a, 412b, 412c, 414a, 414b, 414c, 422a, 422b, 422c, 424a, 424b, 424c is to be controlled by determining a location thereof or via the robot management device 200. In one embodiment, the robot management device 200 receives control permissions from the elevator management device 100. The control permissions received by the robot management device 200 may be permissions to control a specific elevator. The control permissions may be in the form of an authentication key.

In one embodiment, controlling an elevator by the robot 300 may mean that the robot 300 calls a specific elevator and boards the elevator to move to a destination floor.

As used herein, the elevator region 400 may refer to a region in which the elevators 412a, 412b, 412c, 414a, 414b, 414c, 422a, 422b, 422c, 424a, 424b, 424c are grouped together.

In one embodiment, the elevator region 400 may be a specific preselected domain. For example, the elevator region 400 may be an apartment complex, a set of selected buildings, or the like. Assuming the elevator region 400 is an apartment complex, the elevator region 400 includes a first group of selected apartments 410 (for example, block 1) and a second group of selected apartments 420 (for example, block 2). Block 1 (410) includes building 101 (412) and building 102 (414). Block 2 (420) includes building 201 (422) and building 202 (424). Building 101 (412) may have multiple elevators 412a, 412b, 412c, and building 102 (414) may have multiple elevators 414a, 414b, 414c (for example, elevators Nos. 1 to 3). Building 201 (422) may have multiple elevators 422a, 422b, 422c, and building 202 (424) may have multiple elevators 424a, 424b, 424c. It will be understood that the number of elevators, the number of buildings, the number of blocks, block names, and the like are provided for illustration only. That is, the elevator region 400 may include an elevator-equipped building, a set of elevator-equipped buildings, a set of buildings located in a specific area, and the like. The elevator region 400 may include multiple groups formed by grouping the elevators 412a, 412b, 412c, 414a, 414b, 414c, 422a, 422b, 422c, 424a, 424b, 424c into several layers, or may be one of the multiple groups.

In one embodiment, there may be four different layers (for example, a first layer (an apartment complex 400), a second layer (block 1 (410) or block 2 (420)), a third layer (one of buildings 101 to 202 (412 to 424)), and a fourth layer (each elevator 412a, 412b, 412c, 414a, 414b, 414c, 422a, 422b, 422c, 424a, 424b, or 424c), at least one of which may include a terminal operatively connected to corresponding elevators. For example, each of the third layers (buildings 101 to 202 (412 to 424)) may include a terminal operatively connected to corresponding elevators. Control of each elevator 412a, 412b, 412c, 414a, 414b, 414c, 422a, 422b, 422c, 424a, 424b, or 424c may be performed via a terminal operatively connected to a corresponding elevator.

In one embodiment, multiple elevators may be managed by a single system. The multiple elevators may belong to the first layer 400, one of the second layers 410, 420, or one of the third layers 412 to 424. A method of managing the multiple elevators using a single system may be referred to as central control/monitoring. In contrast, a method of individually controlling each of the elevators 412a, 412b, 412c, 414a, 414b, 414c, 422a, 422b, 422c, 424a, 424b, 424c may be referred to as stand-alone control/monitoring.

Although the elevator region 400 is shown as having four layers (for example, the first layer (apartment complex 400), the second layer (block 1 (410) or block 2 (420)), the third layer (one of buildings 101 to 202 (412 to 424)), the fourth layer (each elevator 412a, 412b, 412c, 414a, 414b, 414c, 422a, 422b, 422c, 424a, 424b, or 424c)), the number of layers may be varied as necessary. For example, the elevator region 400 may have at least three sublayers.

FIG. 2 is a block diagram illustrating an example of sublayers of the elevator region 400 according to one embodiment of the present disclosure. The layers illustrated in FIG. 2 are different from those illustrated in FIG. 1.

Referring to FIG. 2, a second layer 2410 may correspond to an apartment building or a building. For example, the second layer 2410 may correspond to one apartment building (for example, building 101), which is a specific building in an apartment complex. That is, the second layer 410 shown in FIG. 1 may be omitted. A third layer 2412 may correspond to an elevator calling line of the specific building (for example, line No. 101-102 of building 101 (2410)). Fourth layers 2412a, 2412b may correspond to individual elevators (for example, elevators Nos. 1 and 2 of line No. 101-102 of building 101 (2410)), respectively.

As such, the elevator region 400 may be divided into multiple depths/layers. It will be understood that the layers of the elevator region 400 are not limited to those illustrated in FIG. 1 and FIG. 2 and may be subject to various variations.

In one embodiment, one layer may include a server (or system) for elevator control. The server/system of the layer may control a corresponding elevator in response to input of a control signal from the elevator management device 100. For example, each of buildings 101 to 202 (412 to 424) may include a server/system that controls multiple elevators. Alternatively, the elevator management device 100 may directly control each elevator.

Referring again to FIG. 1, each of the elevators 412a, 412b, 412c, 414a, 414b, 414c, 422a, 422b, 422c, 424a, 424b, 424c has an ID for identification purposes. Each ID may include numbers corresponding to the respective layers. In one embodiment, the ID may be configured to indicate to which layer a corresponding elevator belongs. For example, the ID may include a number indicating whether a corresponding elevator belongs to the elevator region 400, a number indicating to which of blocks 1 and 2 (410, 420) the elevator belongs, a number indicating to which of buildings 101 to 202 (412 to 424) the elevator belongs, and a number indicating which of elevators Nos. 1 to 3 the elevator is. Accordingly, each elevator may be assigned an ID that includes a number representing each layer of the elevator region (for example, each of the four layers in FIG. 1). The elevator management device 100 may assign, manage, and store an ID corresponding to each elevator.

In one embodiment, each layer may have an ID for identification purposes. That is, an ID corresponding to the first layer 400, an ID corresponding to the second layer (block 1 (410) or block 2 (420)), an ID corresponding to the third layer (one of buildings 101 to 202 (412 to 424)), and an ID corresponding to the fourth layer (each elevator 412a, 412b, 412c, 414a, 414b, 414c, 422a, 422b, 422c, 424a, 424b, or 424c) may be issued. Combining the IDs of the respective layers may generate an ID of a specific individual elevator.

Referring again to FIG. 2, each of the elevators 2412a, 2412b has an ID for identification purposes. Each ID may include numbers corresponding to the respective layers. Each elevator may be assigned an ID that includes a number representing each layer of the elevator region (for example, each of the second to fourth layers in FIG. 2). The elevator management device 100 may assign, manage, and store an Id corresponding to each elevator. Combining the IDs of the respective layers may generate an ID of a specific individual elevator.

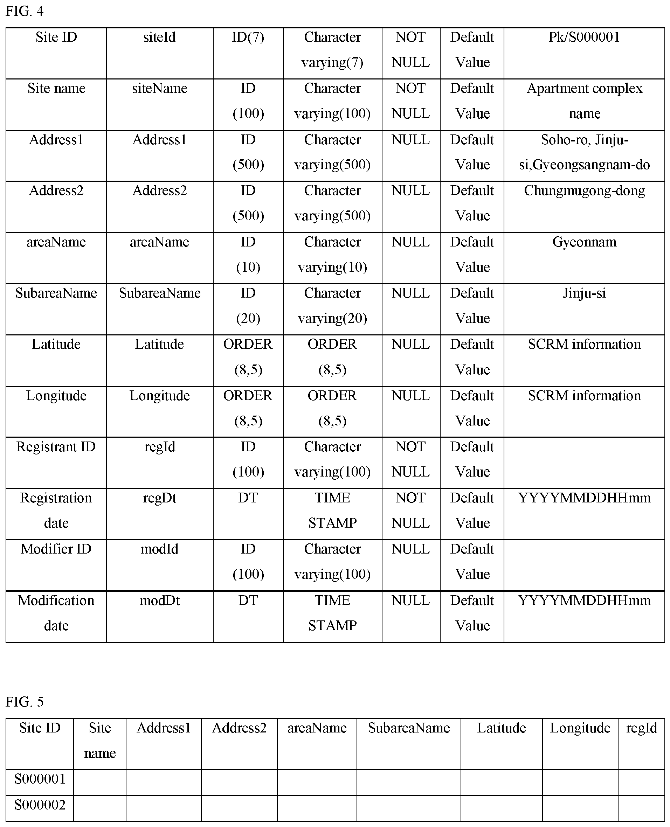

Data about each layer may be organized into database tables to be stored in and managed by the elevator management device 100. FIG. 4 to FIG. 11 show examples of tables stored in the database according to the present disclosure. FIG. 4 to FIG. 11 illustrate examples of database tables corresponding to a first layer to a fourth layer. In one embodiment, the first layer may correspond to a site (for example, an apartment complex, a factory, a hotel, etc.), the second layer may correspond to a building, the third layer may correspond to a line, and the fourth layer may correspond to an elevator.

In one embodiment, siteId, buildingId, lineId, and elId shown in FIG. 4 to FIG. 11 may correspond to first to fourth identification numbers, respectively.

Referring to FIG. 4 and FIG. 5, site information may include site name, address, area name, subarea name, location (for example, latitude, longitude, etc.), registrant, registration date, and the like. The site information may include a site ID (for example, siteId) corresponding to each site. Referring to FIG. 4, site information may include site name, address, area name, subarea name, location (for example, latitude, longitude, etc.), registrant, registration date, and the like, may disposed on a column of a database table as shown in FIG. 4. Corresponding information may fill a row corresponding column of site name, address, area name, subarea name, location (for example, latitude, longitude, etc.), registrant, registration date, and the like as shown in FIG. 4. Referring to FIG. 5, a database table storing the site information may have a row containing at least one of site ID, address, site name, latitude, longitude, registrant, and registration date. That is, in an embodiment, at least one items on a column of FIG. 4 may be item on the row of FIG. 5, as shown in FIG. 5. The blanks on the database table of FIG. 5 may be filled with pre-selected form by a user.

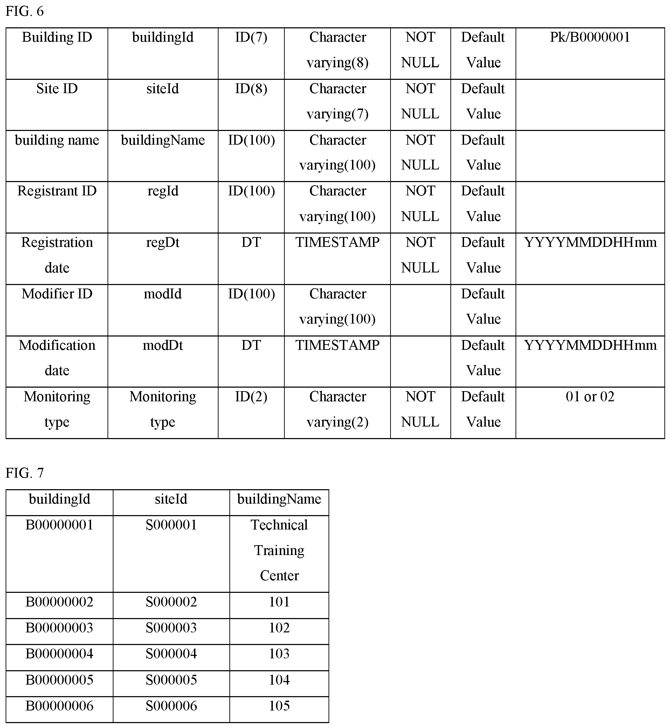

Referring to FIG. 6 and FIG. 7, building information may include building name, registrant, registration date, and the like. The building information may include a building ID (for example, buildingId) corresponding to each building. Referring to FIG. 6, a column of a database table in FIG. 6 has building ID, site ID to which the building ID belongs, building name, registrant, and registration date, etc. Referring to FIG. 7, a database table storing the building information may have a row containing at least one of building ID, site ID to which the building ID belongs, building name, registrant, and registration date. That is, in an embodiment, at least one items on a column of FIG. 6 may be item on the row of FIG. 7, as shown in FIG. 7. The database table storing the building information may contain a reference to a site to which the table pertains. For example, in FIG. 7, building IDs B000002 to B000007 refer to site ID S000002. This indicates that site S000002 contains buildings corresponding to B000002 to B000007. Accordingly, selecting any one site (for example, site Id S000002) from the database 130 may retrieve buildings (or building IDs corresponding to the buildings) belonging to the site.. The blanks on the database table of FIGs. 6 and 7 may be filled with pre-selected form by a user.

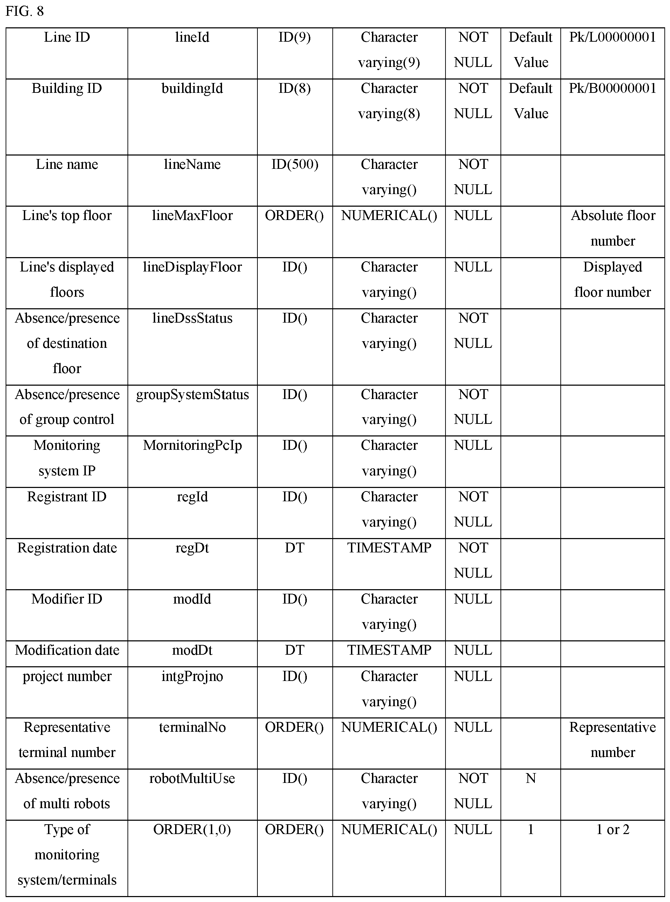

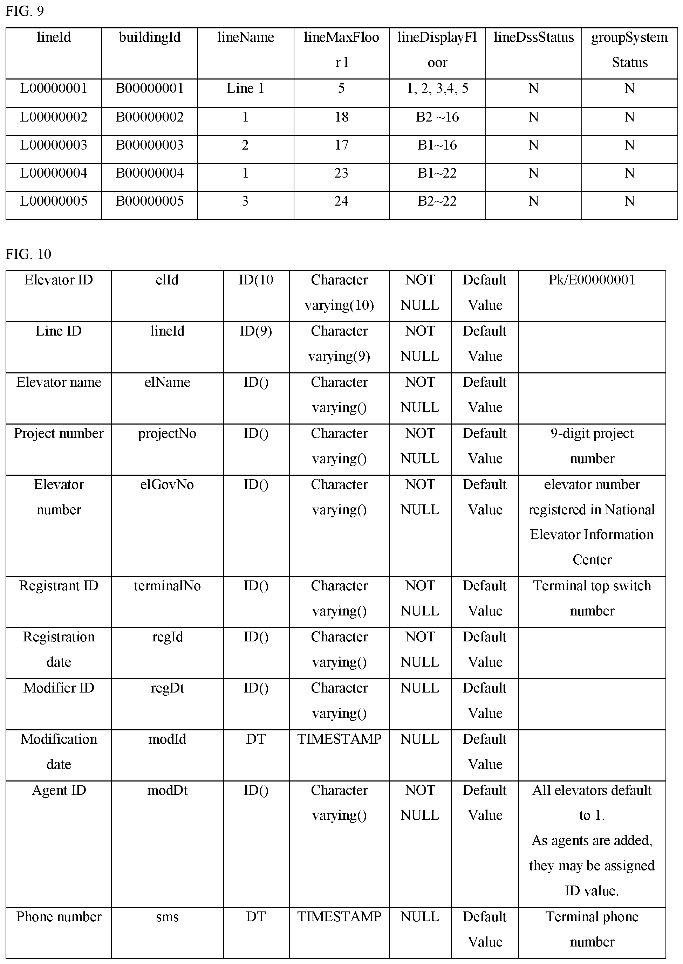

Referring to FIG. 8 and FIG. 9, line information may include line name, top floor of a corresponding line, bottom floor of the line, absence/presence of a destination floor, absence/presence of a group control system, monitoring system IP, registrant, registration date, project number, terminal number, absence/presence of a robot currently using the line, type of monitoring system/terminals, and the like. The line information may include a line ID (for example, lineId) corresponding to each line. Referring to FIG. 9, a database table storing the line information may have a row containing at least one of line ID, building ID to which the line ID belongs, line name, top floor of a corresponding line, bottom floor of the line, absence/presence of a destination floor, absence/presence of a group control system, monitoring system IP, registrant, registration date, project number, terminal number, absence/presence of a robot currently using the line, and type of monitoring system/terminals. That is, in an embodiment, at least one items on a column of FIG. 8 may be item on the row of FIG. 9, as shown in FIG. 9. The database table storing the line information may include a reference to a building to which the table pertains. For example, in FIG. 9, line IDs L000002 and L000003 refer to building ID B000002, and line IDs L000004 and L000005 refer to building ID B000003. This indicates that lines corresponding to L000002 to L000003 belong to a building corresponding to B000002 and lines corresponding to L000004 to L000005 belong to a building corresponding to B000003. Accordingly, selecting any one building (for example, building ID B000002) from the database 130 can retrieve lines (or line IDs corresponding to the lines) belonging to the building.

In one embodiment, the project number may be a unique identifier assigned to a corresponding elevator. Alternatively, the project number may represent an elevator construction site. Alternatively, the project number may correspond to a contract (for example, an elevator contract, and the like).

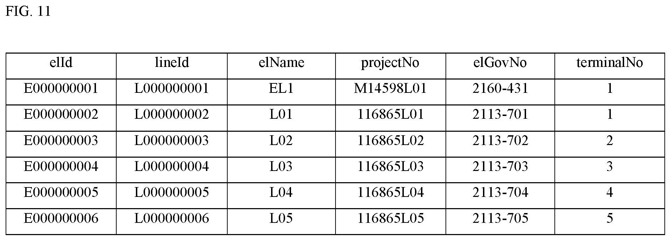

Referring to FIGS. 10 and 11, elevator information may include elevator name, elevator number, terminal number, registrant, registration date, project number, agent ID, and the like. The elevator number is an elevator number registered in the National Elevator Information Center. The Agent ID may be used by the open API system (that is, the elevator management device) to identify each site-specific program (for example, an application installed on the robot management device) and to check and manage the operation status thereof. That is, in an embodiment, at least one items on a column of FIG. 10 may be item on the row of FIG. 11, as shown in FIG. 11.

The elevator information may include elevator ID (for example, elId) corresponding to each elevator. Although not shown in full in FIG. 11, a database table storing the elevator information may have a row containing at least one of elevator ID, line ID to which the elevator ID belongs, elevator name, elevator number, agent Id, project number, registrant, registration date, and terminal number. Referring to FIG. 11, the database table storing the elevator information may include a reference to a line to which the table pertains. For example, in FIG. 11, elevator IDs E000004 and E000005 refer to line ID L000004. This indicates that elevators corresponding to E000004 and E000005 belong to a line corresponding to L000004. Accordingly, selecting any one line (for example, line ID L000004) from the database 130 can retrieve an elevator (or elevator ID corresponding to the elevator) belonging to the line.

The robot management device 200 may have an ID for identification purposes. The robot 300 may have an ID for identification purposes.

In one embodiment, the robot management device 200 may control the elevators 412a, 412b, 412c, 414a, 414b, 414c, 422a, 422b, 422c, 424a, 424b, 424c via an elevator control application. Although one robot management device 200 is shown in FIG. 1, the robot management device 200 may include multiple robot management devices, each of which is a different entity. Each entity may have a different elevator control application. The elevator management device 100 may receive information about the elevator control application from the robot management device 200, and may authenticate the elevator control application.

In one embodiment, the robot 300 or the robot management device 200 may transmit authentication information to the elevator management device 100, and may request registration thereof. The robot 300 or the robot management device 200 may transmit the authentication information to the elevator management device 100 via the elevator control application installed on the robot 300 or the robot management device 200.

The authentication information may include at least one of (identification) information about the robot 300, the robot management device 200, or the elevator control application (for example, an ID corresponding to the robot 300, the robot management device 200, or the elevator control application), contract information including contracting parties and the like, and site information (for example, an ID of the first layer (for example, siteId), an ID of the second layer (for example, buildingId), an ID of the third layer (for example, lineId), and an ID of the fourth layer (for example, elId)). The elevator management device 100 or an administrator of the elevator management device 100 may authenticate/register the robot 300 or the robot management device 200 based on the contract information. The contract information may be pre-stored in a memory 120 or database 130 of the elevator management device 100.

For example, the elevator management device 100 may determine whether the robot management device 200 or the robot 300 has permission to control a site under contract or the like, or may receive results of such determination from an exterior (for example, another database or administrator, etc.). The elevator management device 100 may store information about whether the robot management device 200 or the robot 300 has permission to control a site under contract or the like. In this case, the elevator management device 100 may make an inquiry about permissions granted to the robot management device 200 or the robot 300, and may approve or reject an authentication request from the robot management device 200 based thereon.

In one embodiment, an administrator of the elevator management device 100 may verify whether the robot management device 200 or the robot 300 has permission to control a site under contract or the like, and may approve or reject an authentication request from the robot management device 200 or the robot 300 based thereon.

Authenticating/registering the robot 300 or the robot management device 200 may include authenticating and registering an elevator control application installed on the robot 300 or the robot management device 200. By authenticating/registering the robot 300 or the robot management device 200, the robot 300 may be granted permissions to control elevators at a specified site.

Once the elevator management device 100 authenticates and registers the elevator control application, the robot 300 or the robot control device 200 may be able to control a pre-registered elevator simply by installing the authenticated elevator control application on the robot 300 or the robot control device 200. That is, the robot 300 or the robot control device 200 may not need to send a separate authentication/registration request to the elevator management device 100.

In one embodiment, authenticating and registering the robot 300 or the robot control device 200 with the elevator management device 100 may include allowing an administrator of an external device (for example, the robot control device 200 or the robot 300) to register a control program (for example, a control application) with the elevator management device 100 that they want to connect to the elevator management device 100. If there are multiple control programs, an authentication key may be issued for each control program. If there are multiple external devices, an authentication key may be issued for each program installed on each external device. As a result, each of the external devices with respective control programs installed thereon may have unique permissions. In this case, individual permissions may be granted to each external device. In one embodiment, in order to grant individual permissions to each application or each external device, the elevator management device 100 may assign an agent ID to each control program upon generating the authentication key.

In one embodiment, the elevator management device 100 may provide an authentication key to the robot management device 200 or the robot 300 after authenticating the elevator control application. The elevator management device 100 may send the authentication key to the robot 300 or the robot management device 20, and may register the authentication key in the elevator management device 100. The elevator management device 100 may assign an authentication key to the robot 300, the robot management device 200, or each elevator control application installed on the robot 300 or the robot management device 200, and may store the authentication keys. The authentication keys stored in the elevator management device 100 may be matched with respective IDs of the robot 300, the robot management device 200, and the elevator control applications.

The robot management device 200 may use the authentication key to control the elevators 412a, 412b, 412c, 414a, 414b, 414c, 422a, 422b, 422c, 424a, 424b, 424c.

In one embodiment, the robot management device 200 may control the elevators 412a, 412b, 412c, 414a, 414b, 414c, 422a, 422b, 422c, 424a, 424b, 424c via the elevator control application. The elevator management device 100 may receive a control request, site information (for example, siteId, buildingId, lineId, elId, etc.), and an authentication key from the robot management device 200 or the robot 300. The elevator management device 100 may pre-store information about the elevator region 400 (for example, a database and database tables as shown in FIG. 4 to FIG. 11). Whenever the robot management device 200 or the robot 300 sends an API request for needed control or information, the robot 300 may also send an authentication key assigned to the robot 300, the robot management device 200, or the elevator control application. The elevator management device 100 may determine whether the authentication key is valid and may approve the request for control or information received from the robot management device 200 or the robot 300 when a determination is made that the authentication key is valid. That is, the elevator management device 100 may transmit the control request received from the robot management device 200 or the robot 300 to a corresponding elevator.

In one embodiment, the application may be assigned an authentication key. The robot 300 or the robot management device 200 may transmit the authentication key assigned to the application and a control request to the elevator management device 100. In this case, the robot 300 or the robot management device 200 may not be assigned an authentication key.

In one embodiment, the elevator management device 100 may transmit the control request received from the robot management device 200 or the robot 300 to a terminal operatively connected to a corresponding elevator, and the terminal may control the corresponding elevator in response to the control request.

In one embodiment, the control request from the robot management device 200 or the robot 300 may include a request to call a specific elevator. Alternatively, the control request from the robot management device 200 or the robot 300 may include a request to call an elevator belonging to a specific line. In this case, the elevator management device may call a most suitable elevator among multiple elevators belonging to the specific line. Elevator calling is well known to a person of ordinary skill in the art and will not be described in detail.

In one embodiment, multiple requests may be transmitted in succession to the elevator management device 100. In this case, an identifier unique to each request may be generated. The identifier unique to each request may be generated by the elevator management device 100, the robot management device 200, or the robot 300. The identifier unique to each request may be referred to as a "transaction ID".

FIG. 3 is a block diagram of the elevator management device 100 according to one embodiment of the present disclosure.

The elevator management device 100 may include a processor 110, a memory 120, a database 130, and a communication unit 140. In one embodiment, the processor 110 may include application specific integrated circuits (ASICs), digital signal processors (DSPs), digital signal processing devices (DSPDs), programmable logic devices (PLDs), field programmable gate arrays (FPGAs), controllers, microcontrollers, microprocessors, or any other suitable processors or controllers for performing functions described herein.

The memory 120 may be configured to store information for operation of the elevator management device 100. The memory 120 may store multiple application programs or applications running on the elevator management device 100 and data/instructions readable by the processor. For example, the memory 120 may include various storage spaces, such as a hard disk drive (HDD), a solid state drive (SSD), a silicon disk drive (SDD), ROM, RAM, EPROM, a flash drive, a hard drive, and a networked cloud.

The database 130 is configured to store information about the elevator region 400. The database 130 may include various storage spaces, such as a hard disk drive (HDD), a solid state drive (SSD), a silicon disk drive (SDD), ROM, RAM, EPROM, a flash drive, a hard drive, and a networked cloud. Although the memory 120 and the database 130 have been described as separate components, it will be understood that the memory 120 and the database 130 may be regarded as one and the same component.

In one embodiment, the database 130 may be configured to store the database tables illustrated in FIG. 4 to FIG. 11. The database 130 may store identification information for individual elevators 412a, 412b, 412c, 414a, 414b, 414c, 422a, 422b, 422c, 424a, 424b, 424c. The database 130 may store elevator information managed or produced by an administrator (for example, a first administrator) of the elevator management device 100. For example, the first administrator may supply elevators to a place where a new building is being constructed, and may register information about the supplied elevators in the database 130 or another database (not shown) of the first administrator. The database 130 and the other database may be synchronized, such that elevator information stored in the other database can be updated in the database 130. If an administrator other than the first administrator (for example, a second administrator) supplies elevators to a place where a new building is constructed, information about the elevators supplied by the second administrator may be stored in a database of a national public platform (for example, a third administrator). The elevator information stored in the third administrator's database may be updated in the database 130.

In one embodiment, the database 130 may receive elevator information from a national public platform (for example, a public data portal or the like) via an open API. The elevator information retrieved from data received from the public data portal may include elevator serial numbers. The format of the elevator information retrieved from the data received from the public data portal may differ from or not include the format of pre-stored data (for example, siteId, buildingId, lineId, elId). Accordingly, the elevator management device 100 may be configured to generate siteId, buildingId, lineId, and elId from the data received from the public data portal and store the generated siteId, buildingId, lineId, and elId in the database 130. An elevator management number includes an elevator number issued by a public organization (for example, the Elevator Safety Authority). The elevator management device 100 may be configured to generate siteId, buildingId, lineId, and elId from the data using information such as address and building name based on the elevator management number issued by the public organization and store the generated siteId, buildingId, lineId, and elId in the database 130.

The communication unit 140 is configured to communicate with an external device via a network. Here, the communication network may include a network established according to Global System for Mobile communication (GSM), Code Division Multi Access (CDMA), High Speed Downlink Packet Access (HSDPA), High Speed Uplink Packet Access (HSUPA), Long Term Evolution (LTE), Long Term Evolution-Advanced (LTE-A), Wireless LAN (WLAN), Wi-Fi, Wi-Fi-Direct, Digital Living Network Alliance (DLNA), Wireless Broadband (WiBro), or World Interoperability for Microwave Access (WiMAX). However, it will be understood that the present disclosure is not limited thereto and the network may include a network established according to any data transmission protocol that may be developed in the future. In addition, the communication network may include any wired/wireless data communication network.

The processor 110 and the memory 120 may be combined together to implement an artificial intelligence model. As used herein, the term "artificial intelligence model" may refer to a learning model that includes an artificial neural network (ANN) and is trained with huge amounts of data to optimize parameters within the ANN and to engage in operations of a conversational system (not shown). In one embodiment, an artificial intelligence module (not shown) may be trained through machine reading comprehension (MRC). In one embodiment, an artificial neural network model used in the artificial intelligence module may include at least one of a convolutional neural network (CNN), a deep neural network (DNN), a recurrent neural network (RNN), a restricted Boltzmann machine (RBM), a deep belief network (DBN), a bidirectional recurrent deep neural network (BRDNN), a variational auto encoder (VAE), a deep Q-network, and a combination thereof, without being limited thereto.

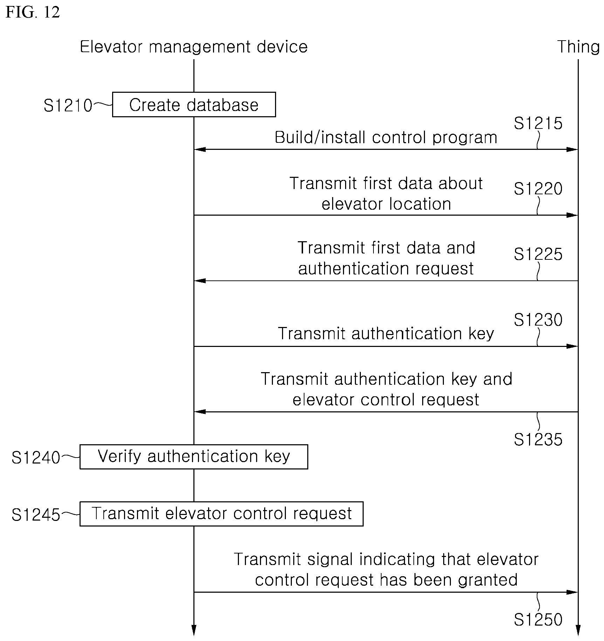

FIG. 12 is a flow diagram of an elevator control method according to one embodiment of the present disclosure.

An elevator management device may be provided in the form of a cloud platform. The elevator management device may be disposed at a location physically separate from elevators. The elevator management device may include at least one computing device, and may be implemented as a server. The elevator management device may be implemented as a cloud server (system). The elevator management device is configured to provide a programming environment that allows an external developer to build applications for external users using resources of the elevator management device 100. The elevator management device may include an open API and a developer site providing information about the open API.

A thing may include a device capable of remotely accessing the elevator management device to control elevators. For example, the thing may include any device for remotely controlling a device inside a building from outside, such as a building management system, an access security system, a passenger identification device (for example, facial recognition, iris recognition, fingerprint recognition, etc.), a mobile device, a thing management server, a drone, and a robot.

Referring to FIG. 12, the elevator management device may create a database (block S1210). The created database may be stored in the elevator management device. The database may be configured to store a first identification number corresponding to a first layer representing a group including multiple buildings, a second identification number corresponding to a second layer representing one of the multiple buildings, a third identification number corresponding to a third layer representing multiple elevators in the one building, and a fourth identification number corresponding to a fourth layer representing one of the multiple elevators. The database 130 may be created by receiving and using elevator information from a national public platform (for example, a public data portal, etc.) via an open API. Updates to the database may be made regularly.

An administrator of the thing may use the developer site to build a control program based on the open API provided by the elevator management device (block S1215). Alternatively, a predeveloped control program may be installed on the thing.

The elevator management device may transmit first data to the thing, wherein the first data indicates an elevator, a line containing the elevator, a building containing the line, and a group of multiple buildings to which the building belongs (block S 1220). The first data may include data matched with the first to fourth identification numbers.

The thing may transmit a portion of the first data corresponding to an elevator desired to be controlled and an authentication request to the elevator management device (block S 1225).

The elevator management device may transmit an authentication key to the thing (block S 1230). Specifically, the elevator management device may receive an instruction indicating that the authentication request has been confirmed, generate an authentication key in response thereto, and transmit the generated authentication key to the thing. The elevator management device may store the authentication key. The elevator management device may store authentication keys in such a way that the authentication keys correspond to respective control programs. Alternatively, the elevator management device may store authentication keys in such a way that the authentication keys correspond to respective elevators that can be controlled via the authentication keys. Alternatively, the elevator management device may store authentication keys in such a way that the authentication keys correspond to respective sets of the first to fourth identification numbers. The thing may store the authentication key and elevator information corresponding to the authentication key.

The thing may transmit the authentication key and an elevator control request to the elevator management device (block S1235). The thing may transmit at least a portion of the first data, the authentication key, and the elevator control request to the elevator management device. The thing may transmit at least some of the first to fourth identification numbers, the authentication key, and the elevator control request to the elevator management device. The elevator control request may be a request to call a specific elevator.

The elevator management device may verify the received authentication key (block S 1240). The elevator management device may verify the received authentication key using pre-stored data (for example, pre-stored authentication keys, pre-stored elevator information corresponding to the authentication keys, etc.).

When a verification is made that the received authentication key is valid, the elevator management device may transmit the elevator control request to an elevator control terminal block S1245). In response to the elevator control request, the elevator control terminal controls a corresponding elevator. The elevator management device may notify the thing that the elevator control request has been granted (block S 1250).

Four layers and four identification number are stored in a database of an elevator management device of an example above. However, the number of the layers and the number of the identification number may be different or changed. For example, in an embodiment, an elevator management device may comprise a database, a processor, and a communication unit. The database is configured to store a first identification number corresponding to a first layer representing a group of multiple building, a second identification number corresponding to a second layer representing one of the multiple buildings, and a third identification number corresponding to a third layer representing multiple elevators in the one building. The elevator management device receives an authentication key and an elevator control request via the communication unit. The processor is configured to verify the received authentication key and transmit the elevator control request to an elevator control terminal when a verification is made that the received authentication key is a valid authentication key.

Meanwhile, the methods according to the present disclosure may be implemented as code that can be written on a processor-readable recording medium and thus read by a processor of a server, system, equipment, computer, or integrated control unit which is used by a certain entity. The processor-readable recording medium may be any type of recording device in which data is stored in a processor-readable manner. The processor-readable recording medium may include, for example, ROM, RAM, CD-ROM, a magnetic tape, a floppy disk, and an optical data storage device, and may be implemented in the form of a carrier wave transmitted over the Internet. In addition, the processor-readable recording medium may be distributed over a plurality of computer systems connected to a network such that processor-readable code is written thereto and executed therefrom in a decentralized manner.

The devices and methods described above may be implemented by a hardware component, a software component, and/or a combination thereof. For example, the devices and components described in the embodiments may be implemented using one or more general-purpose computers or special-purpose computers, such as a processor, a controller, an arithmetic logic unit (ALU), a digital signal processor, a microcomputer, a field programmable array (FPA), a programmable logic unit (PLU), a microprocessor, or any other device capable of executing and responding to instructions. The processing device may execute an operating system (OS) and one or more software applications executable on the operating system. The processing device may also access, store, manipulate, process, and generate data in response to execution of software. For convenience of understanding, the processing device is sometimes described as utilizing a single processing element, but a person having ordinary skill in the art will recognize that the processing device may include multiple processing elements and/or multiple types of processing elements. For example, the processing device may include multiple processors, or may include one processor and one controller. Further, another processing configuration such as a parallel processor is possible.

The software may include computer programs, code, instructions, or a combination thereof. The software may configure the processing device to operate as desired, or may independently or collectively instruct the processing device. The software and/or data may be permanently or temporarily embodied in any type of machine, component, physical device, virtual equipment, computer storage medium or device, or transmitted signal wave, for interpretation by the processing device or for providing instructions or data to the processing device. The software may also be distributed across networked computer systems to be stored or executed in a decentralized manner. The software and the data may be stored on one or more computer-readable recording media.

The embodiments of the present disclosure may be practiced in a distributed computing environment where certain tasks are performed by remote processing devices connected via a communication network. In the distributed computing environment, program modules may be located on both local and remote memory storage devices.

While the preferred embodiments of the present disclosure have been described with reference to the drawings as above, it should be understood that the foregoing embodiments are provided for illustration only and are not to be in any way construed as limiting the present invention, and that various modifications, changes, alterations, and equivalent embodiments can be made by those skilled in the art without departing from the spirit and scope of the disclosure. For example, even when the invention described herein is performed in a different order than described herein and/or the components of the described systems, structures, devices, circuits, etc. are combined or assembled in a different form than described herein or are substituted or replaced by other components or equivalents thereto, suitable results can be achieved.

Therefore, other implementations, other embodiments, and equivalents to the appended claims fall within the scope of the claims.

## Claims

1. An elevator management device comprising a database, a processor, and a communication unit,
wherein the database is configured to store a first identification number corresponding to a first layer representing a group of multiple buildings, a second identification number corresponding to a second layer representing one of the multiple buildings, a third identification number corresponding to a third layer representing multiple elevators in the one building, and a fourth identification number corresponding to a fourth layer representing one of the multiple elevators,
the elevator management device receives an authentication key and an elevator control request via the communication unit, and
the processor is configured to verify whether the received authentication key is an authentication key generated by the elevator management device and transmit the request to an elevator control terminal in response to verifying that the received authentication key is an authentication key generated by the elevator management device.

2. The elevator management device according to claim 1, wherein:
the elevator management device receives at least one of the first to fourth identification numbers and an authentication request from an external device via the communication unit; and
the processor is configured to generate an authentication key and transmit the generated authentication key to the external device.

3. The elevator management device according to claim 1, wherein the database is configured to store the first identification number and related information in a first database table, store the second identification number and related information in a second database table, store the third identification number and related information in a third database table, and store the fourth identification number and related information in a fourth database table.

4. The elevator management device according to claim 3, wherein:
the second database table has a row containing the first identification number and the second identification number;
the third database table has a row containing the second identification number and the third identification number; and
the fourth database table has a row containing the third identification number and the fourth identification number.

5. The elevator management device according to claim 4, wherein:
the second database table is configured to show to which group of the first layer the second layer belongs;
the third database table is configured to show to which building of the second layer the third layer belongs; and
the fourth database table is configured to show to which the third layer the fourth layer belongs.

6. The elevator management device according to claim 1, wherein the elevator control request received by the elevator management device comprises the first identification number, the second identification number, and the third identification number.

7. The elevator management device according to claim 6, wherein the elevator control request comprises a request to control one of the multiple elevators corresponding to the third layer.

8. The elevator management device according to claim 1, wherein the elevator control request received by the elevator management device comprises the first identification number, the second identification number, the third identification number, and the fourth identification number, and comprises a request to control one elevator corresponding to the fourth layer.

9. An elevator management device comprising a database, a processor, and a communication unit,
wherein the database is configured to store a first identification number corresponding to a first layer representing a group of multiple buildings, a second identification number corresponding to a second layer representing one of the multiple buildings, and a third identification number corresponding to a third layer representing multiple elevators in the one building,
the elevator management device receives an authentication key and an elevator control request via the communication unit, and
the processor is configured to verify the received authentication key and transmit the elevator control request to an elevator control terminal in response to verifying that the received authentication key is a valid authentication key.

10. An elevator control method by an elevator management device using an open API, wherein the elevator management device comprises a database, a processor, and a communication unit, the database being configured to store a first identification number corresponding to a first layer representing a group of multiple buildings, a second identification number corresponding to a second layer representing one of the multiple buildings, a third identification number corresponding to a third layer representing multiple elevators in the one building, and a fourth identification number corresponding to a fourth layer representing one of the multiple elevators, the elevator control method comprising:
providing, by the processor, first data to enable an external device to select a group of multiple buildings, one of the multiple buildings, multiple elevators in the one building, and one of the multiple elevators;
receiving, by the communication unit, at least a portion of the first data and an authentication request;
generating, by the processor, an authentication key in response to the authentication request and sending the generated authentication key to the external device;
receiving, by the communication unit, the authentication key and an elevator control request from the external device; and
transmitting, by the processor, the elevator control request to an elevator control terminal in response to verifying that the authentication key is valid.

11. The elevator control method according to claim 10, further comprising:
generating, by the processor, a first database table containing the first identification number and related information, a second database table containing the second identification number and related information, a third database table containing the third identification number and related information, and a fourth database table containing the fourth identification number and related information and storing the generated first to fourth database tables in the database.

12. The elevator control method according to claim 11, wherein:
the second database table has a row containing the first identification number and the second identification number;
the third database table has a row containing the second identification number and the third identification number; and
the fourth database table has a row containing the third identification number and the fourth identification number.

13. The elevator control method according to claim 10, wherein the elevator control request comprises at least a portion of the first data.

14. The elevator control method according to claim 13, wherein the elevator control request comprises a request to control one of the multiple elevators corresponding to the third layer.

15. The elevator control method according to claim 10, wherein the elevator control request comprises the first identification number, the second identification number, the third identification number, and the fourth identification number, and comprises a request to control one elevator corresponding to the fourth layer.
